# EUROPÄISCHE PATENTSCHRIFT

(11) **EP 2 209 665 B1**
(45) Veröffentlichungstag und Bekanntmachung des Hinweises auf die Patenterteilung: **03.08.2011**
(21) Anmeldenummer: 08802741.2
(22) Anmeldetag: 02.10.2008
(51) Int. Cl.: B60L 11/18, B62D 47/00, B62D 63/06, B60S 5/06, B60K 1/04

(54) **FAHRZEUG MIT EINER LÖSBAREN FAHZEUGBEFESTIGTEN TRANSPORTEINRICHTUNG**
VEHICLE HAVING A DETACHABLE TRANSPORT DEVICE ATTACHED TO THE VEHICLE
VÉHICULE COMPRENANT UN DISPOSITIF DE TRANSPORT FIXÉ AU VÉHICULE DE FAÇON AMOVIBLE

(30) Priorität: 14.11.2007 DE 102007054258
(43) Veröffentlichungstag der Anmeldung: 28.07.2010
(73) Patentinhaber: Bayerische Motoren Werke Aktiengesellschaft, 80809 München (DE)
(72) Erfinder: SEIDL, Josef, 84130 Dingolfing (DE)
(86) Internationale Anmeldenummer: PCT/EP2008/008333
(87) Internationale Veröffentlichungsnummer: WO 2009/062570

(56) Entgegenhaltungen:
- DE-A1- 4 140 508
- DE-A1-102006 035 911
- US-A- 3 690 397

## Beschreibung

Die vorliegende Erfindung betrifft ein Fahrzeug mit einer Transporteinrichtung gemäß dem Oberbegriff des Patentanspruches 1 sowie eine Transporteinrichtung gemäß dem Oberbegriff des Patentanspruches 14.

Ein derartiges Fahrzeug bzw. eine derartige Transporteinrichtung ist aus der DE 41 40 508 A1 bekannt. Zum relevanten Stand der Technik zählt ferner die US 3,690,397.

Fahrzeuge mit zusätzlichem Elektroantrieb, so genannte Hybridfahrzeuge, und reine Elektrofahrzeuge, gewinnen zunehmend an Bedeutung. Auch im Zweiradbereich werden Elektrofahrzeuge in geringen Stückzahlen verkauft. Dass sich Elektrofahrzeuge bislang auf dem Markt wenig durchsetzen konnten liegt nicht zuletzt daran, dass aufgrund beschränkter Batteriekapazitäten die Reichweite relativ gering ist, Ladestationen zum Aufladen von Batterien kaum verfügbar sind und das Aufladen relativ lange dauert. Wenngleich Stadtbewohner eine Zielgruppe für kleine Elektrofahrzeuge, wie z. B. Scooter wären, steht meist kein geeigneter Fahrzeugstellplatz mit Stromanschluss zur Verfügung.

Aufgabe der Erfindung ist es, ein Fahrzeug mit einer Fahrzeugbatterie zu schaffen, die komfortabel an einer "externen" Ladestation aufgeladen werden kann sowie eine entsprechende Transporteinrichtung.

Diese Aufgabe wird durch die Merkmale der Patentansprüche 1 bzw. 15 gelöst. Vorteilhafte Ausgestaltungen und Weiterbildungen der Erfindung sind den Unteransprüchen zu entnehmen.

Ausgangspunkt der Erfindung ist ein Fahrzeug mit einer Transporteinrichtung, die lösbar am Fahrzeug befestigt ist. Der Begriff "Fahrzeug" umfasst hier grundsätzlich alle Arten von Fahrzeugen, insbesondere Zweiradfahrzeuge, wie Motorräder, Roller bzw. Scooter, dreirädrige bzw. vierrädrige Fahrzeuge.

Gemäß der Erfindung ist in oder an der Transporteinrichtung eine Fahrzeugbatterie angeordnet ist. Zum Laden der Fahrzeugbatterie braucht die Transporteinrichtung mit der daran bzw. darin angeordneten Fahrzeugbatterie lediglich vom Fahrzeug abgenommen und zu einer externen Ladestation bzw. zu einem Netzanschluss transportiert werden.

Der Kern der Erfindung besteht darin, dass in bzw. an der Transporteinrichtung eine Ladeelektronik zum Aufladen der Fahrzeugbatterie angeordnet ist. Der Begriff "Ladeelektronik" kann insbesondere ein Netzteil und eine Steuerung bzw. Regelung umfassen, welche den Ladevorgang steuert bzw. regelt. Die Ladeelektronik kann dann unmittelbar an ein Wechselstromnetz angeschlossen werden.

Die Erfindung ist insbesondere für Elektrofahrzeuge geeignet, d. h. für Fahrzeuge, die einen Elektromotor aufweisen, der zum Antrieb des vorgesehenen ist und der von der Fahrzeugbatterie mit elektrischer Energie versorgt wird.

Nach einer Weiterbildung der Erfindung weist die Transporteinrichtung mindestens ein Rad, vorzugsweise zwei oder mehrere Räder auf, was ein Rollen bzw. Ziehen oder Schieben der Transporteinrichtung ermöglicht. Die relativ schwere Fahrzeugbatterie braucht somit nicht getragen werden, sondern kann mittels der Transporteinrichtung gerollt, gezogen bzw. geschoben werden.

Vorzugsweise ist die Transporteinrichtung in der Art eines Trolleys ausgebildet. Entsprechend einem Trolley kann die Transporteinrichtung zwei oder mehrere Räder bzw. Walzen und einen ausziehbaren oder ausklappbaren Griff aufweisen, so dass die Transporteinrichtung nach dem Abstellen des Fahrzeugs lediglich vom Fahrzeug abgenommen werden muss und dann komfortabel zu einer Ladestation gezogen werden kann.

Nach einer Weiterbildung der Erfindung ist die Fahrzeugbatterie, wenn die Transporteinrichtung am Fahrzeug befestigt ist, elektrisch mit einem Bordnetz des Fahrzeugs verbunden. Hierzu können an der Transporteinrichtung bzw. an der Batterie und am Fahrzeug einander zugeordnete elektrische Kontakte vorgesehen sein. Es kann vorgesehen sein, dass die Kontakte einander "automatisch" kontaktieren, sobald die Transporteinrichtung am Fahrzeug befestigt wird.

Nach einer Weiterbildung der Erfindung ist vorgesehen, dass die Transporteinrichtung von Hand am Fahrzeug befestigbar ist und von Hand vom Fahrzeug lösbar ist. Die Transporteinrichtung kann insbesondere seitlich, z. B. in einem Heckbereich des Fahrzeugs angeordnet sein.

Nach einer Weiterbildung der Erfindung ist am Fahrzeug eine "Einhängevorrichtung" vorgesehen, in die die Transporteinrichtung eingehängt werden kann. Zusätzlich können Sicherungsmittel vorgesehen sein, die die Transporteinrichtung gegen Verrutschen bzw. Lösen sichern.

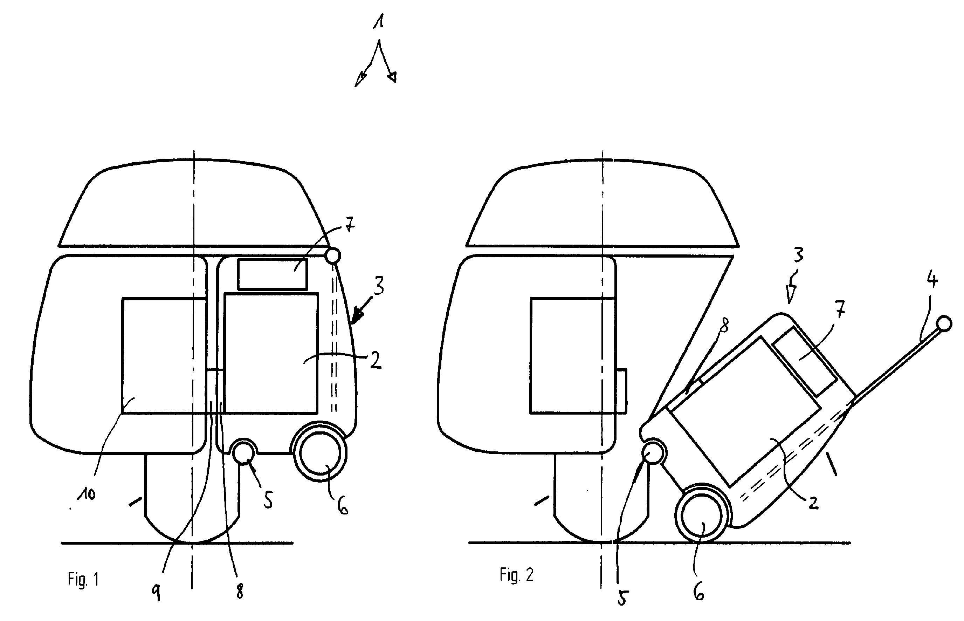

Im Folgenden wird die Erfindung im Zusammenhang mit der Zeichnung näher erläutert. Die Figuren 1 und 2 zeigen das Grundprinzip der Erfindung in schematischer Darstellung.

Die Figuren 1 und 2 zeigen jeweils eine Schnittansicht eines Motorrads bzw. Scooters. Das Fahrzeug 1 weist einen hier nicht näher dargestellten Elektroantrieb auf, dessen Elektromotor von einer Batterie 2 mit Strom versorgt wird. Die Batterie 2 ist in einer "Transporteinrichtung" 3 untergebracht, die lösbar am Fahrzeug 1 befestigt ist und die in der Art eines Trolley ausgebildet ist. Der Trolley weist einen ausziehbaren Griff 4 auf. In Figur 1 ist die Transporteinrichtung 3 am Fahrzeug 1 befestigt, z. B. in einer Halteeinrichtung des Fahrzeugs oder unmittelbar an einem Rahmenelement eingehängt.

In Figur 2 ist die Transporteinrichtung 3 abgenommen und das Griffstück 4 ausgezogen. Wie aus den Figuren 1 und 2 ersichtlich ist, weist die Transporteinrichtung 3 Räder 5, 6 auf, die es ermöglichen, die trolleyartige Transporteinrichtung 3 zu rollen, zu ziehen bzw. zu schieben. Die in der Transporteinrichtung 3 untergebrachte Fahrzeugbatterie braucht somit nicht getragen werden. In die Transporteinrichtung 3 ist zusätzlich zur Fahrzeugbatterie 2 eine Ladeelektronik 7 integriert, die beispielsweise ein Netzteil zum Anschluss an ein Wechselstromnetz und eine Ladesteuerung bzw. Laderegelung enthält, welche für einen kontrollierten Ladevorgang sorgt.

An der Transporteinrichtung sind ferner erste Kontakte 8 vorgesehen, die mit zweiten, fahrzeugseitigen Kontakten 9 zusammenwirken. Wie aus Figur 1 ersichtlich ist, berühren die Kontakte 8, 9 einander, sobald die Transporteinrichtung 3 am Fahrzeug angeordnet ist. Über die Kontakte 8, 9 ist die Fahrzeugbatterie 2 elektrisch mit einer fahrzeugseitig angeordneten Elektronik 10 und somit mit dem Bordnetz des Fahrzeugs verbunden.

Ein wesentlicher Vorteil der Erfindung besteht darin, dass die relativ schwere Fahrzeugbatterie zum Laden nicht getragen werden muss, sondern geschoben, gezogen werden kann. Ein vorteilhafter Nebeneffekt ist, dass sich durch Abnehmen der Fahrzeugbatterie eine "Diebstahlsicherung" ergibt.

## Patentansprüche

1. Fahrzeug (1) mit einer Transporteinrichtung (3), die lösbar am Fahrzeug (1) befestigt ist, wobei in oder an der Transporteinrichtung (3) eine Fahrzeugbatterie (2) angeordnet ist, **dadurch gekennzeichnet, dass**
in oder an der Transporteinrichtung (3) eine Ladeelektronik (7) zum Aufladen der Fahrzeugbatterie (2) angeordnet ist, wobei die Ladeelektronik (7) wiederum einen elektrischen Anschluss zur Verbindung mit einem Stromnetz aufweist.

2. Fahrzeug nach Anspruch 1, **dadurch gekennzeichnet, dass** das Fahrzeug (1) einen zum Antrieb des Fahrzeugs (1) vorgesehenen Elektromotor aufweist, wobei der Elektromotor von der Fahrzeugbatterie (2) mit elektrischer Energie versorgt wird.

3. Fahrzeug nach Anspruch 1 oder 2, **dadurch gekennzeichnet, dass** die Transporteinrichtung (3) mindestens ein Rad (5, 6) aufweist, welches ein Rollen bzw. Ziehen bzw. Schieben der Transporteinrichtung (3) ermöglicht.

4. Fahrzeug nach einem der Ansprüche 1 bis 3, **dadurch gekennzeichnet, dass** die Transporteinrichtung (3) in der Art eines Trolleys ausgebildet ist und einen ausziehbaren oder ausklappbaren Griff (4) aufweist.

5. Fahrzeug nach einem der Ansprüche 1 bis 4, **dadurch gekennzeichnet, dass**, wenn die Transporteinrichtung (3) am Fahrzeug befestigt ist, die Fahrzeugbatterie (2) elektrisch mit einem Bordnetz (10) des Fahrzeugs (1) verbunden ist.

6. Fahrzeug nach einem der Ansprüche 1 bis 5, **dadurch gekennzeichnet, dass** am Fahrzeug (1) fahrzeugseitige Kontakte und an der Transporteinrichtung (3) damit zusammenwirkende Kontakte (8) vorgesehen sind, wobei die an der Transporteinrichtung (3) vorgesehenen Kontakte (8) die fahrzeugseitigen Kontakte (9) kontaktieren, wenn die Transporteinrichtung (3) am Fahrzeug angeordnet ist.

7. Fahrzeug nach einem der Ansprüche 1 bis 6, **dadurch gekennzeichnet, dass** die Transporteinrichtung (3) von Hand am Fahrzeug (1) befestigbar und von Hand vom Fahrzeug (1) lösbar ist.

8. Fahrzeug nach einem der Ansprüche 1 bis 7, **dadurch gekennzeichnet, dass** die Transporteinrichtung (3) seitlich am Fahrzeug (1) befestigbar ist.

9. Fahrzeug nach einem der Ansprüche 1 bis 8, **dadurch gekennzeichnet, dass** die Transporteinrichtung (3) in einem Heckbereich des Fahrzeugs (1) am Fahrzeug (1) befestigt.

10. Fahrzeug nach einem der Ansprüche 1 bis 9, **dadurch gekennzeichnet, dass** die Transporteinrichtung (3) am Fahrzeug eingehängt und gegen Verrutschen gesichert ist.

11. Fahrzeug nach einem der Ansprüche 1 bis 10, **dadurch gekennzeichnet, dass** das Fahrzeug (1) ein Zweiradfahrzeug ist.

12. Fahrzeug nach einem der Ansprüche 1 bis 10, **dadurch gekennzeichnet, dass** das Fahrzeug (1) ein dreirädriges Fahrzeug ist.

13. Fahrzeug nach einem der Ansprüche 1 bis 10, **dadurch gekennzeichnet, dass** das Fahrzeug (1) vierrädriges Fahrzeug ist.

14. Transporteinrichtung (3) in der Art eines Trolleys, die zur Befestigung an einem Fahrzeug (1) vorgesehen ist, wobei in oder an der Transporteinrichtung (3) eine Fahrzeugbatterie (2) zur Versorgung eines Bordnetzes (10) des Fahrzeugs 81) mit elektrischer Energie angeordnet ist **dadurch gekennzeichnet, dass**
in oder an der Transporteinrichtung (3) eine Ladeelektronik (7) zum Aufladen der Fahrzeugbatterie (2) angeordnet ist, wobei die Ladeelektronik (7) wiederum einen elektrischen Anschluss zur Verbindung mit einem Stromnetz aufweist.

## Claims

1. A vehicle (1) with a conveying device (3) releasably fastened to the vehicle (1), wherein a vehicle battery (2) is disposed in or on the conveying device (3), **characterised in that**
an electronic unit (7) for charging the battery (2) is disposed in or on the conveying device (3), wherein the charging unit (7) has an electric connection for connecting to a mains supply.

2. A vehicle according to claim 1, **characterised in that** the vehicle (1) is driven by an electric motor, wherein the motor is supplied with electric energy by the battery (2).

3. A vehicle according to claim 1 or claim 2, **characterised in that** the conveying device (3) has at least one wheel (5, 6) for rolling or pulling or pushing the conveying device (3).

4. A vehicle according to any of claims 1 to 3, **characterised in that** the conveying device (3) is in the form of a trolley and has an extendable or foldable handle (4).

5. A vehicle according to any of claims 1 to 4, **characterised in that** when the conveying device (3) is fastened to the vehicle, the battery (2) is electrically connected to an electric supply system (10) for the vehicle (1).

6. A vehicle according to any of claims 1 to 5, **characterised in that** contacts on the vehicle (1) and cooperating contacts (8) on the conveying device (3) are provided, wherein the contacts (8) on the conveying device (3) make contact with the vehicle contacts (9) when the conveying device (3) is disposed on the vehicle.

7. A vehicle according to any of claims 1 to 6, **characterised in that** the conveying device (3) can be fastened to the vehicle (1) by hand and detached from the vehicle (1) by hand.

8. A vehicle according to any of claims 1 to 7, **characterised in that** the conveying device (3) is attachable to the side of the vehicle (1).

9. A vehicle according to any of claims 1 to 8, **characterised in that** the conveying device (3) is fastened to a rear region of the vehicle (1).

10. A vehicle according to any of claims 1 to 9, **characterised in that** the conveying device (3) is suspended from the vehicle and secured against slipping.

11. A vehicle according to any of claims 1 to 10, **characterised in that** the vehicle (1) is a two-wheel vehicle.

12. A vehicle according to any of claims 1 to 10, **characterised in that** the vehicle (1) is a three-wheel vehicle.

13. A vehicle according to any of claims 1 to 10, **characterised in that** the vehicle (1) is a four-wheel vehicle.

14. A conveying device (3) such as a trolley for fastening to a vehicle (1), wherein a battery (2) is disposed in or on the conveying device (3) for supplying a supply system (10) for the vehicle (1) with electrical energy, **characterised in that**
an electronic unit (7) for charging the battery (2) is disposed in or on the conveying device (3), wherein the charging unit (7) has an electric connection for connecting to a mains supply.

## Revendications

1. Véhicule (1) équipé d'une installation de transport (3) fixée de manière amovible au véhicule (1),
l'installation de transport (3) logeant une batterie (2) du véhicule, véhicule **caractérisé en ce que**
l'installation de transport (3) comporte une électronique de chargement (7) pour charger la batterie (2) du véhicule, et
l'électronique de chargement (7) a un connecteur électrique pour être reliée au réseau électrique.

2. Véhicule selon la revendication 1,
**caractérisé par**
un moteur électrique pour l'entraînement du véhicule (1),
le moteur électrique étant alimenté en énergie électrique à partir de la batterie (2) du véhicule.

3. Véhicule selon la revendication 1 ou 2,
**caractérisé en ce que**
l'installation de transport (3) comporte au moins une roue (5, 6) permettant de rouler, de tirer ou de pousser l'installation de transport (3).

4. Véhicule selon l'une des revendications 1 à 3,
**caractérisé en ce que**
l'installation de transport (3) est réalisée sous la forme d'un chariot avec une poignée (4) extractible ou rabattable.

5. Véhicule selon l'une des revendications 1 à 4,
**caractérisé en ce que**
la batterie (2) du véhicule est raccordée électriquement au réseau embarqué (10) du véhicule (1) lorsque l'installation de transport (3) est fixée au véhicule.

6. Véhicule selon l'une des revendications 1 à 5,
**caractérisé en ce que**
le véhicule (1) a des contacts côté véhicule avec lesquels coopèrent des contacts (8) de l'installation de transport (3),
les contacts (8) de l'installation de transport (3) entrent en contact avec les contacts (9) côté véhicule lorsque l'installation de transport (3) est montée sur le véhicule.

7. Véhicule selon l'une des revendications 1 à 6,
**caractérisé en ce que**
l'installation de transport (3) se fixe à la main au véhicule (1) et s'en détache à la main.

8. Véhicule selon l'une des revendications 1 à 7,
**caractérisé en ce que**
l'installation de transport (3) est fixée latéralement au véhicule (1).

9. Véhicule selon l'une des revendications 1 à 8,
**caractérisé en ce que**
l'installation de transport (3) se fixe au véhicule (1) dans la zone arrière du véhicule (1).

10. Véhicule selon l'une des revendications 1 à 9,
**caractérisé en ce que**
l'installation de transport (3) s'accroche au véhicule et se bloque en coulissement.

11. Véhicule selon l'une des revendications 1 à 10,
**caractérisé en ce que**
le véhicule (1) est un chariot à deux roues.

12. Véhicule selon l'une des revendications 1 à 10,
**caractérisé en ce que**
le véhicule (1) est un chariot à trois roues.

13. Véhicule selon l'une des revendications 1 à 10,
**caractérisé en ce que**
le véhicule (1) est un chariot à quatre roues.

14. Installation de transport (3) en forme de mallette roulante destinée à être fixée à un véhicule (1),
l'installation de transport (3) comportant une batterie de véhicule (2) pour alimenter en énergie électrique le réseau embarqué (10) du véhicule (1),
installation **caractérisée par**
une électronique de chargement (7) pour charger la batterie (2) du véhicule, l'électronique de chargement (7) comportant un moyen de connexion électrique pour être reliée à un réseau électrique.
